# EUROPEAN PATENT APPLICATION

(11) **EP 1 209 571 A1**
(43) Date of publication of application: **29.05.2002**
(21) Application number: 00911417.4
(22) Date of filing: 28.03.2000
(51) Int. Cl.: G06F 13/00, G06F 15/00, G06F 17/30, G06F 17/60, G06F 19/00

(54) **ADVERTISING SYSTEM AND METHOD USING ELECTRONIC COMMUNICATION**

(30) Priority: 15.06.1999 JP 16823799
(71) Applicant: Nagano, Hiroaki, Sunto-gun, Shizuoka 411-0941 (JP)
(72) Inventor: Nagano, Hiroaki, Sunto-gun, Shizuoka 411-0941 (JP)
(74) Representative: Grünecker, Kinkeldey, Stockmair & Schwanhäusser Anwaltssozietät
(86) International application number: JP0001903
(87) International publication number: WO0077646

(57) **Abstract**

To provide an advertising system (10) using electronic communications that is capable of determining whether a user has actually accessed supplied advertising data, while accommodating advertisement sponsors that wish to provide advertising data under a limited budget. The advertising system (10) using electronic communications comprises a terminal device (11) for allowing a user to input personal data for registration in an interactive format; a personal-data database (13) that is connected to the terminal device (11) for storing the personal data that has been input from the terminal means (11); an advertising-data input device (12) for inputting advertising data; an advertising-data database; (14) connected to the personal-data database (13) for storing the advertising data that has been input from the advertising-data input device (12); an advertising-data searching/extracting device (15) for extracting from advertising data stored in the an advertising-data storage device (14) specific advertising data conforming to personal data relating to the user, based on user-related personal data that has been stored in the personal-data database (13); an advertising-data transmitter (16) for transmitting the advertising data extracted by the advertising-data searching/extracting device (15) to the terminal device (11) of the user via electronic communications; an advertising-data notification device (17) for notifying the user that advertising data has been transmitted from the advertising-data transmitter (16); a display device (18) for displaying the advertising data notified by the advertising-data notification device (17) according to access directions given by the user; an advertising-data identification/counting device (19) for identifying each item of advertising data displayed on the display device (18) according to the access directions and for counting the number of directions given to access each advertising data; and an advertising-fee calculation/notification device (20) for calculating advertising fees, based on the number of access directions for each item of advertising data as counted by the advertising-data identification/counting device (19) and for notifying sponsors of the advertising fee for each item of advertising data.

## Description

### 1. TECHNICAL FIELD

The present invention relates to an advertising system using electronic communications, such as the Internet and communication satellites.

### 2. BACKGROUND ART

One type of advertising that employs the Internet and that is well known in the art is a "banner advertisements," which is placed on Web pages.

One system for more efficiently providing such advertising data as banner ads to users is described in Japanese unexamined Patent Application Publication No. H10-240828. This system is an advertisement delivery service system capable of dynamically providing users advertising data corresponding to their needs when required. This system includes (1) CD-ROMs on which have been recorded service data, such as graphic data and advertising data from service sponsors, with the CD-ROMs being distributed to a plurality of users as a communications application program; (2) control-data transmitting means that access an information center server from the CD-ROM through terminal operations and that obtains data for controlling the communication application program from the information center server. The system is configured to provide users with advertising data from the information center server. The advertising data conforms to static attribute data, such as the user's address, age, and the like, and dynamic needs obtained by the control-data transmitting means based on real-time access frequency listed in the user's dynamic log data.

Another Internet advertising system is described in Japanese unexamined Patent Application Publication No. H9-259189. This conventional-document advertising/sales system uses an online data-provision system, such as the Internet, to enable users to view the tables of contents in magazines and to quickly obtain desired articles from the magazines via e-mail. The fees for the articles are billed electronically. This system includes (1) a scanner for reading combined picture and text image data from the covers and tables of contents in magazines and other printed materials into a client computer connected to a network; (2) an electronic typesetting-data-inputting device for reading as text data electronic typesetting data such as the printed text data in the tables of contents and the like; a data transfer means for compressing data read from the scanner or electronic typesetting-data-inputting device and transferring the data to a server; (3) electronic delivery means for transmitting faxes or e-mail via the server or separate servers; (4) data-transfer means for transferring order data to the client computer of a publications dealer, based on customer accesses of data transferred to the server, and (5) an online billing system that electronically settles charges for customer orders based on instructions from the dealer. The charges are settled online between the customer's bank and the dealer's bank. Accordingly, this system can use an electronic means to transmit articles in digital form from magazines and other publications to a customer, based on a customer order, or it can deliver the printed matter containing the article ordered by the customer. The system can then settle the bill for the purchased article electronically.

The conditional system described above enables an advertising sponsor to provide advertising data according to user needs. However, this conventional system is problematic in that it is impossible to confirm whether the user has actually accessed the advertising data.

Further, the conventional system described above employs a method of guaranteeing the amount of exposure of the advertising data. Accordingly, advertisement sponsors must pay advertising fees to the company that owns the advertising-data managing system, regardless of whether the user actually accesses the advertising data. Such a system cannot adapt to sponsors who wish to provide advertising data under a limited budget.

In view of the foregoing, it is an object of the present invention to provide an advertising system and method employing such electronic communications as the Internet and communication satellites, with the system and method being capable of determining whether a user actually accesses supplied advertising data, while accommodating advertisement sponsors who wish to provide advertising data under a limited budget.

### 3. DISCLOSURE OF THE INVENTION

The above objects of the present invention will be attained by an advertising system that uses electronic communications and that is comprised of: (1) terminal means for allowing a user to input personal data for registration in an interactive format; (2) personal-data storage means connected to the terminal means for storing the personal data that is input from the terminal means; (3) advertising-data input means for inputting advertising data; (4) advertising-data storage means connected to the advertising-data input means for storing the advertising data that is input from the advertising-data input means; (5) advertising-data extraction means for extracting advertising data conforming to personal data of the user from advertising data stored in the advertising-data storage means, based on personal data of the user stored in the personal-data storage means; (6) advertising-data transmission means for transmitting the advertising data that is extracted by the advertising-data extraction means to the terminal means of the user via electronic communications; (7) advertising-data notification means for notifying the user that advertising data has been transmitted from the advertising-data transmission means; (8) display means for displaying, according to access directions by the user, advertising data that is notified by the advertising-data notification means; (9) advertising-data identification/counting means for (a) identifying each item of advertising data that is displayed on the display means according to the access directions, and (b) counting the number of directions given to access each item of advertising data; and (10) advertising-fee calculation/notification means for (a) calculating advertising fees, based on the number of access directions for each item of advertising data counted by the advertising-data identification/counting means and (b) notifying the sponsor of each item of advertising data of the advertising fees so calculated.

The present invention's advertising system can further comprise (1) point-number management means for converting the number of directions for accessing each item of advertising data counted by the advertising-data identification/counting means into a point number and for accumulating and updating the point number for each user; (2) point-number storage means for sorting and storing the point number that have been updated by the point-number management means for each user; and (3) point-service notification means for notifying the users of the point number stored in the point-number storage means and of a variety of service data based on the point number.

The present invention's advertising system can further comprise (1) home-page access means for enabling a user to access home pages of sponsors of the advertising data, based on the advertising data displayed by the display means; (2) order/request notification means for notifying an advertising data sponsor via the home page accessed by the user via the home-page access means of orders for products or requests for services included in the viewed advertising data; and (3) order/request-point notification means for notifying the point-number management means of the point number, based on products ordered or services requested using the order/request notification means.

In the present invention's advertising system, the electronic communications can be electronic mail employing the Internet, satellite communications, or both.

The above objects of the present invention will further by attained by an advertising method, using electronic communications means, that consists of the following steps: (a) inputting a user's personal data; (b) storing the personal data that has been input; (c) inputting advertising data; (d) storing the advertising data that has been input; (e) extracting from the stored advertising data specific advertising data that is tailored to the user, based on the stored personal data; (f) transmitting the extracted advertising data to the user via the electronic communications means; (g) notifying the user of the transmitted advertising data; (h) displaying the advertising data, based on directions for accessing data from the user; (i) identifying the type of advertising data displayed; (j) counting the number of access directions for displaying the advertising data; (k) calculating a fee for the displayed advertising data, based on the number of access directions counted; and (I) notifying the sponsor of the displayed advertising data of the advertising fees calculated.

The present invention's advertising method can further comprise the following steps: (a) converting the number of access directions for the counted advertising data to a point number; (b) accumulating and updating the point number for each user; (c) sorting and storing the updated point number for each user; and (d) notifying the user of the point number and of various service data based on the point number.

The present invention's advertising method can further comprise the steps of (a) accessing the home page of an advertising-data sponsor, based on advertising data displayed by the user; (b) notifying the advertising-data sponsors via the home page accessed by the user of orders for products or requests for services included in the viewed advertising data; and (c) issuing a notification of the point numbers based on products ordered or services requested.

In the present invention's advertising method, the electronic communications can be electronic mail employing the Internet, satellite communications, or both.

### 4. BRIEF DESCRIPTION OF THE DRAWINGS

In the drawings:
Fig. 1 is a block diagram showing the general configuration of an Internet advertising system serving as the preferred embodiment of the advertising system employing electronic communications according to the present invention;
Fig. 2 is a flowchart illustrating the operations of the Internet advertising system in Fig. 1;
Fig. 3 is a continuation of the flowchart in Fig. 2;
Fig. 4 is a continuation of the flowchart in Fig. 3; and
Fig. 5 is a continuation of the flowchart in Fig. 4.

### 5. BEST MODE FOR CARRYING OUT THE INVENTION

An Internet advertising system according to a preferred embodiment of the present invention will be described while referring to the accompanying drawings.

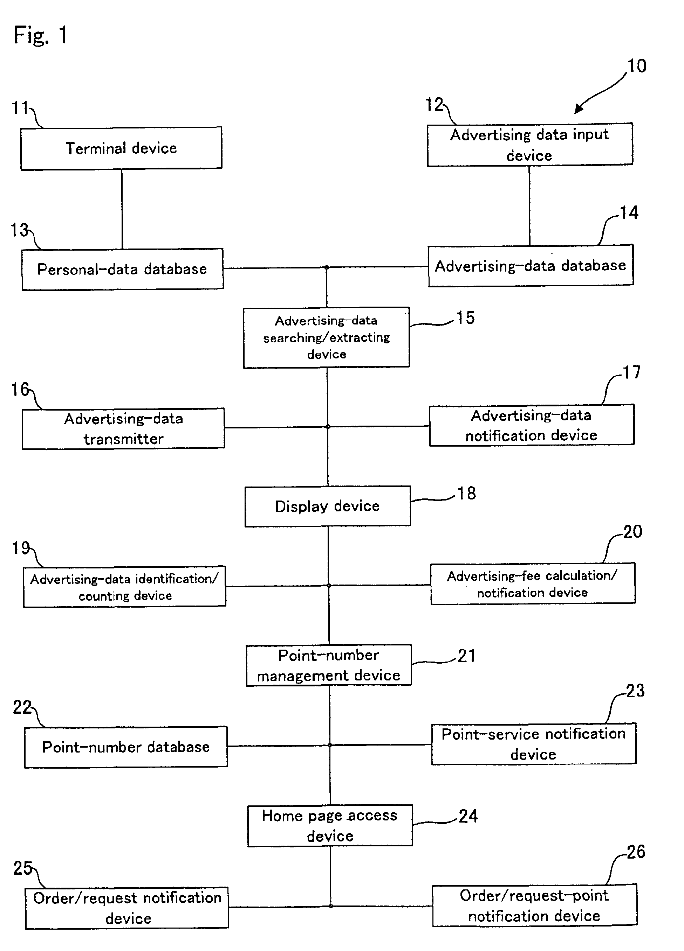

Fig. 1 is a block diagram showing the general configuration of an Internet advertising system serving as the preferred embodiment of the advertising system employing electronic communications according to the present invention.

An Internet advertising system 10 (hereinafter referred to as "system") is configured to enable users who are registered as members of the system to view.advertising data, transmitted via e-mail, for stores and service providers taking part in a "virtual mall." The users can subsequently access the Websites of the stores and service providers corresponding to the advertising data viewed in the e-mail. The system 10 is also configured such that advertising data for stores and service providers other than those in the virtual mall (i.e., external stores) is transmitted to users via e-mail. When viewing the e-mail advertising data for these external stores and external service providers, the users can access the Websites corresponding to those stores and service providers.

Users that wish to access the system 10 of Fig. 1 are required to first register as members of the organization utilizing the system 10. Accordingly, the system 10 includes a terminal device 11 for enabling users to input personal data required for member registration into the system 10 in an interactive format. The system 10 is further provided with a personal-data database 13 that is connected to the terminal device 11 for storing personal data that users input via the terminal device 11.

The following data must be included in the personal data input by users via the terminal device 11 when the user registers for membership: 1. name, 2. address, 3. sex, 4. age, 5. telephone number, 6. e-mail address, and 7. hobbies/interests.

Personal data including the above items input by the user via the terminal device 11 are stored and accumulated in the personal-data database 12.

The system 10 further comprises an advertising-data input device 12 that enables the sponsors of advertisements to input advertising data into the system 10. The system 10 includes an advertising-data database 14 connected to the advertising-data input device 12 for storing advertising data that is input via the advertising-data input device 12. Advertising data input via the advertising-data input device 12 includes advertising data for stores and service providers taking part in the virtual mall, as well as advertising data for external stores and external service providers. When storing advertising data in the advertising-data database 14, it is necessary to differentiate the advertising data of stores and service providers in the virtual mall from the advertising data of those outside the virtual mall. This point is described below.

The system 10 also includes an advertising-data searching/extracting device 15 and an advertising-data transmitter 16. The advertising-data searching/extracting device 15 searches the user personal-data database 12, searches the advertising-data database 14 based on the personal data of users noted as registered members in the user personal-data database 13(hereinafter referred to as "registered users"), and extracts advertising data adapted to the personal data of these registered users from the data stored in the advertising-data database 14. The advertising-data transmitter 16 transmits, via the Internet in the form of e-mail, to the terminal device 11 of the registered user the advertising data extracted by the advertising-data searching/extracting device 15.

The system 10 is further provided with (1) an advertising-data notification device 17 disposed on the terminal device 11 end, for notifying the registered user that advertising data has been received in the form of e-mail from the advertising-data transmitter 16, and (2) a display device 18 also disposed on the terminal device 11 end, for displaying on a display screen as a result of access directions (mouse clicks) by the registered user the advertising data announced by the advertising-data notification device 17.

The system 10 is also provided with (1) an advertising-data identification/counting device 19, for identifying each advertisement displayed on the display device 18 in response to mouse clicks by the user and for counting the number of times each advertisement is clicked (in other words, the number of times the data is displayed), and (2) an advertising-fee calculation/notification device 20, for calculating advertising fees based on the number of times each advertisement is clicked, as counted by the advertising-data identification/counting device 19, and for notifying the corresponding sponsors of the advertising fees periodically or with each access request.

The system 10 comprises (1) a point-number management device 21 for converting the number of clicks on each advertising data, as counted by the advertising-data identification/counting device 19, into a point number and then accumulating and updating the point number for each user; (2) a point-number database 22 for storing and accumulating the point numbers accumulated and updated by the point-number management device 21, sorted according to user; and (3) a point-service notification device 23 for notifying each user of the point number stored in the point-number database 22 periodically or with each access request, as well as for notifying each user of various free services that are available according to the point number accumulated by the user.

The system 10 further comprises (1) a home-page access device 24 for accessing the Websites of the advertisement sponsors, based on the advertising data displayed on the display device 18; (2) an order/request notification device 25 for notifying the advertisement sponsor, via the home page accessed by the registered user using the home-page access device 24, of orders for products included in the viewed advertising data or of requests for services listed in the viewed advertising data; and (3) an order/request-point notification device 26 for notifying the point-number management device 21 of the point number of products ordered or services requested via the order/request notification device 25.

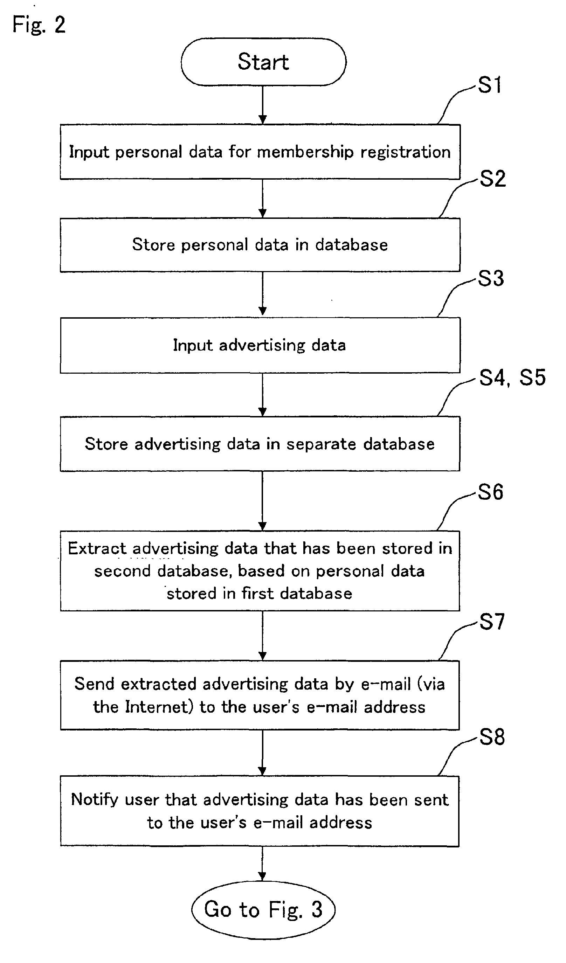

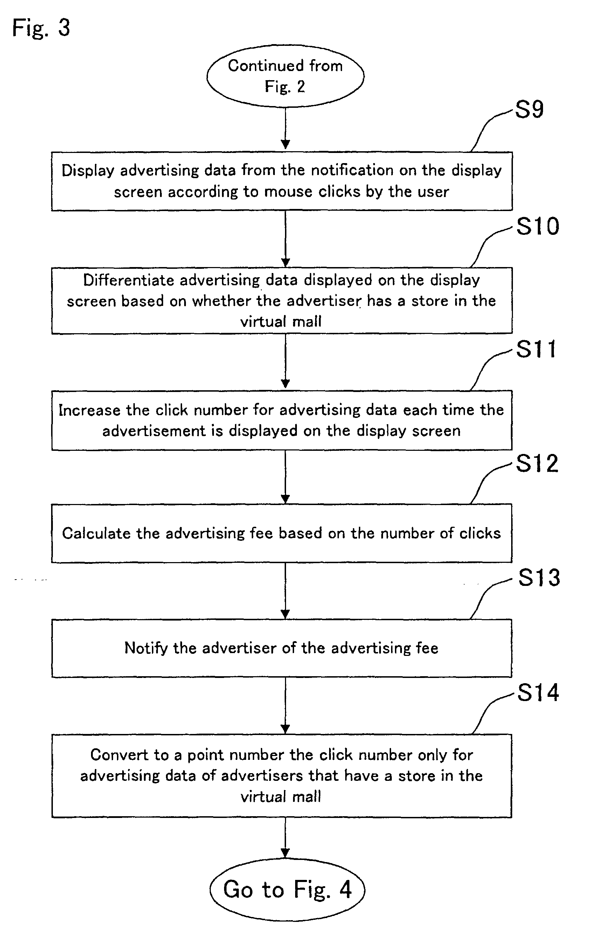

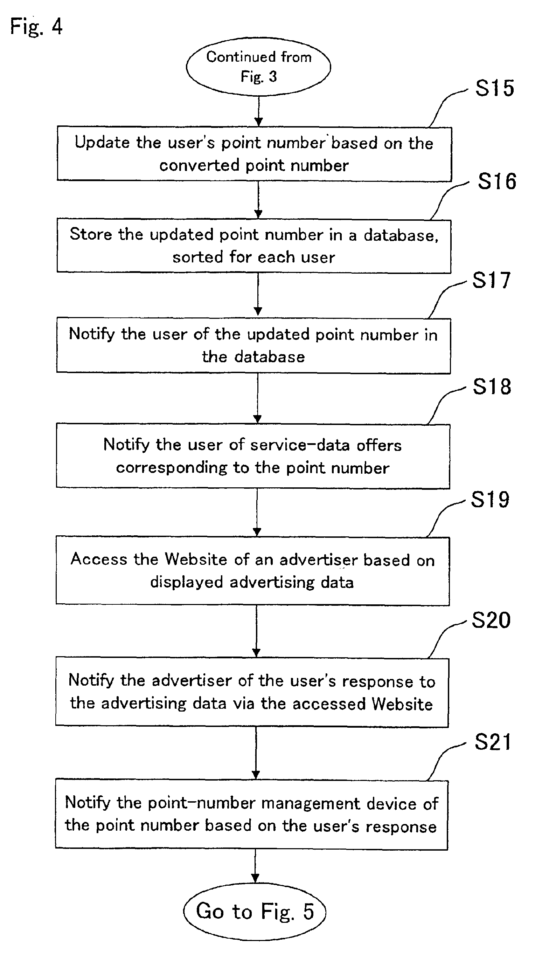

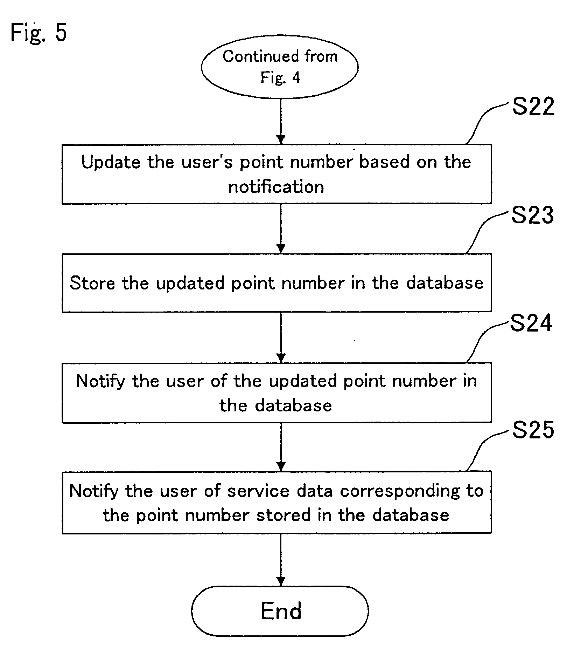

Next, the operations of the system 10 in Fig. 1 will be described in more detail with reference to Figs. 2-5.

A user wishing to use the system 10 registers for membership by entering personal data using the terminal device 11 (Step S1). This personal data includes the user's name, address, sex, age, telephone number, e-mail address, and hobbies/interests. As an example, the user enters the following: "Name: Taro Yamada; Sex: Male; Age: 28; Telephone number: 045-123-5678; E-mail address: TYAMADA@EMAIL.COM; Hobbies/Interests: cars, driving." The personal data for this user input via the terminal device 11 is transmitted to the database 12 and stored therein (Step S2).

Sponsors of advertising data can input desired advertising data using the advertising-data input device 12 (Step S3). For example, one sponsor is a company called A Automobiles, which has a store in the virtual mall. When A Automobiles inputs advertising data for an "Introduction and test-ride event for A Automobiles' new cars" using the advertising-data input device 12, the input advertising data is transmitted to the advertising-data database 14 and is stored therein (Step S4).

A sponsor of advertising data without a store in the virtual mall is a company called B Automobiles. When B Automobiles inputs advertising data regarding an "Introduction and test-ride event for B Automobiles' imported cars" via the advertising-data input device 12, the inputted advertising data is transmitted to the advertising-data database 14 and is stored therein (Step S5).

The advertising-data searching/extracting device 15 searches the database 12 for personal data and subsequently searches the advertising-data database 14 based on the personal data for Taro Yamada, a registered user stored in the database 12 (Step S6). The advertising-data searching/extracting device 15 extracts the advertising data regarding the "Introduction and test-ride event for A Automobiles new cars" and the "Introduction and test-ride event for B Automobiles imported cars," advertising data that conforms with the registered user Taro Yamada's personal data (Hobbies/lnterests: cars), from the advertising data stored in the advertising-data database 14.

The advertising-data transmitter 16 transmits via e-mail, to the e-mail address TYAMADA@EMAIL.COM of the registered user Taro Yamada, the advertising data "Introduction and test-ride event for A Automobiles new cars" and "Introduction and test-ride event for B Automobiles imported cars" that has been extracted by the advertising-data searching/extracting device 15 (Step S7).

The advertising-data notification device 17 disposed on the terminal device 11 end notifies the registered user Taro Yamada that advertising data regarding an "Introduction and test-ride event for A Automobiles new cars" and an "Introduction and test-ride event for B Automobiles imported cars" has been sent to the TYAMADA@EMAIL.COM address via e-mail (Step S8). The display device 18 disposed on the terminal device 11 end displays, based on access directions (mouse clicks) within the e-mail messages sent to Taro Yamada, the advertising data "Introduction and test-ride event for A Automobiles new cars" and "Introduction and test-ride event for B Automobiles imported cars" that has been reported by the advertising-data notification device 17 (Step S9).

The advertising-data identification/counting device 19 identifies what type of data is displayed on the display device 18 (Step S10). The advertising data "Introduction and test-ride event for A Automobiles new cars" is identified as advertising data of a member sponsor, because the sponsor of this data is A Automobiles, which has a store in the virtual mall. The advertising data "Introduction and test-ride event for B Automobiles imported cars" is identified as advertising data of a nonmember sponsor because the sponsor of this data is B Automobiles, which is outside the virtual mall. The advertising-data identification/counting device 19 counts the number of times each advertising data "Introduction and test-ride event for A Automobiles new cars" and "Introduction and test-ride event for B Automobiles imported cars" is clicked (that is, the number of times the advertisements are displayed) by increasing an A-count and B-count once for each click (Step S11). The advertising-fee calculation/notification device 20 calculates the advertising fee for each advertising data "Introduction and test-ride event for A Automobiles new cars" and "Introduction and test-ride event for B Automobiles imported cars" based on the number of A-count and B-count clicks counted by the advertising-data identification/counting device 19 (Step S12), and provides appropriate notification to A Automobiles and B Automobiles, the sponsors of the advertising data (Step S13).

The point-number management device 21 converts only the number of clicks A-count into a point number (Step S14), where A-count is the number of clicks counted by the advertising-data identification/counting device 19 for the advertising data "Introduction and test-ride event for A Automobiles new cars" provided by A Automobiles, because A Automobiles has a store in the virtual mall. The point-number management device 21 updates the point number by the registered user Taro Yamada (Step S15). The point-number database 22 records the point number accumulated by the registered user Taro Yamada, as updated by the point-number management device 21 (Step S16). The point-service notification device 23 notifies Taro Yamada of the point number stored in the point-number database 22 (Step S17) and simultaneously informs Taro Yamada of various service-data offers that are available according to point number by Taro Yamada (Step S18).

Based on the advertising data "Introduction and test-ride event for A Automobiles new cars" displayed in the display device 18, the registered user Taro Yamada uses the home-page access device 24 to access the home page of A Automobiles (Step S19). Taro Yamada further uses the order/request notification device 25 to notify. A Automobiles that he is considering the purchase from A Automobiles of a new car included in the advertising data "Introduction and test-ride event for A Automobiles new cars" (Step S20). The notification is sent via the Website of A Automobiles, which is accessed by the home-page access device 24. If, after test-driving the car, Taro Yamada decides to actually purchase from A Automobiles a new car that is one of the new products listed in the advertising data, the point-number database 22 notifies the point-number management device 21 of the point number based on Taro Yamada's prior notification (of his desire to purchase a new car from A Automobiles) that was made (in Step S20) through the order/request notification device 25. Accordingly, the point number by Taro Yamada is updated (Step S22) and recorded in the point-number database 22 in (Step S23). At the same time, the point-service notification device 23 notifies Taro Yamada both of the updated point number by him and stored in the point-number database 22 (Step S24) and of various service-data offers that are available based on the point number that he has accumulated (Step S25).

Next, the main services and member privileges for the Internet advertising system of the present invention will be described.

### I. Registered Member

### A. Privileges of registered members

1. Registered users can purchase products or enjoy services in the virtual mall at special members-only prices.
2. Members receive cash-back points for products purchased at special member-only prices.

### B. Benefits when a registered member views the home pages of an advertiser

A registered member receives one point for each advertisement viewed on an advertiser's Website if the advertiser has a store in the virtual mall.

### C. Benefits when a registered member receives advertisements by e-mail

A registered member receives two points if he or she actually clicks on an advertisement received by e-mail and views the advertising data.

### II. Sponsors of Advertising Data

### A. Low-cost high-efficiency advertising data

Unlike the conventional Internet advertising method of guaranteed exposure rates, the Internet advertising system of the present invention only subjects an advertiser to advertising fees when its Web page had actually been viewed.

In other words, because the system of the present invention employs a number-of-clicks type Internet advertising method, a sponsor pays advertising fees to the advertising system provider according to the number of times registered users access the advertiser's Website. For example, if an Internet advertisement leads to 10,000 accesses of the advertiser's home page, at a rate of ¥3 per access, the advertiser pays a fee of ¥30,000 to the system provider. If absolutely no accesses result from the advertisement, the advertising fee is ¥0.

Further, the Internet advertising system of the present invention can transmit directly to the registered user by e-mail specific Internet advertising data that is tailored for each user, based on the registered user's personal data. For example, using the "address" data for registered users, the system can transmit Internet advertisements targeting only registered users living in a specific area. Retailers such as buckwheat-noodle shops, grocers, and butchers, who rely heavily on local customers, can provide effective Internet advertisements to specific locales, thereby efficiently using the Internet advertising system of the present invention.

### B. Combined Use with a Debit System

The Internet advertising system of the present invention can be combined with a debit system to expand the scope of applications for point accounts used in the virtual mall. Point accounts can be linked online to actual bank accounts. Hence, the system is configured such that registered users not only can shop in the virtual mall, but also can use points accumulated when shopping at normal convenience stores and department stores. Further, points accumulated in point accounts can be used for withdrawing cash and the like from ATMs, just like from normal bank accounts.

In the embodiment described above, the present invention is described using the Internet as the means of electronic communications, but the present invention is not limited to this type of electronic communications. For example, a communications satellite or other electronic communications means can be employed. Further, in the present invention, the Internet can include a satellite-based Internet.

The present invention's advertising system comprises (1) a terminal means for allowing a user to input personal data for registration in an interactive format; (2) a personal-data storage means connected to the terminal means, for storing the personal data that is input from the terminal means; (3) an advertising-data input means for inputting advertising data; (4) an advertising-data storage means connected to the advertising-data input means, for storing the advertising data inputted from the advertising-data input means; (5) an advertising-data extraction means, for extracting from advertising data stored in the advertising-data storage means specific advertising data that conforms to personal data of the user, based on the user's personal data that is stored in the personal-data storage means; (6) an advertising-data transmission means, for transmitting to the terminal means of the user via electronic communications the advertising data that is extracted by the advertising-data extraction means; (7) an advertising-data notification means, for notifying the user that advertising data has been transmitted from the advertising-data transmission means; (8) a display means for displaying the advertising data notified by the advertising-data notification means according to access directions by the user; (9) advertising-data identification/counting means, for identifying each advertising data that is displayed on the display means according to the access directions, and for counting the number of directions given to access each advertising data; and (10) an advertising-fee calculation/notification means for calculating advertising fees, based on the number of access directions for each advertising data, as counted by the advertising-data identification/counting means, and for notifying the sponsor of each advertising data of the advertising fee. Accordingly, the present invention is capable both of determining whether a user has actually accessed supplied advertising data and of accommodating advertisement sponsors that wish to provide advertising data under a limited budget.

The present invention's advertising method comprises the following steps: (1) inputting personal data relating to the user; (2) storing the personal data that has been input; (3) inputting advertising data; (4) storing the advertising data that has been input; (5) extracting from the stored advertising data specific advertising data this is tailored to the user, based on the user's personal data that has been stored; (6) transmitting the extracted advertising data to the user via the electronic communications; (7) notifying the user of the transmitted advertising data; (8) displaying the advertising data, based on directions for accessing data from the user; (9) identifying the type of displayed advertising data; (10) counting the number of access directions for displaying the advertising data; (11) calculating a fee for the displayed advertising data, based on the number of access directions counted; and (12) notifying the sponsor of the displayed advertising data of the calculated advertising fee. Accordingly, the present invention is capable both of determining whether a user has actually accessed supplied advertising data and of accommodating advertisement sponsors who wish to provide advertising data under a limited budget.

## Claims

1. An advertising system using electronic communications, with the system comprising:
terminal means for allowing a user to input personal data for registration in an interactive format;
personal-data storage means, connected to the terminal means, for storing the personal data inputted from the terminal means;
advertising-data input means for inputting advertising data;
advertising-data storage means connected to the advertising-data input means for storing the advertising data inputted from the advertising-data input means;
advertising-data extraction means for extracting from advertising data stored in the advertising-data storage means specific advertising data that conforms to personal data of the user, based on the user's personal data that is stored in the personal-data storage means;
advertising-data transmission means for transmitting to the terminal means of the user via electronic communications the advertising data that has been extracted by the advertising-data extraction means;
advertising-data notification means for notifying the user that advertising data has been transmitted from the advertising-data transmission means;
display means for displaying, according to access directions by the user, the advertising data notified by the advertising-data notification means;
advertising-data identification/counting means for identifying each item of advertising data displayed on the display means according to the access directions and for counting the number of directions given to access each advertising data; and
advertising-fee calculation/notification means for calculating the advertising fees based on the number of access directions for each advertising data counted by the advertising-data identification/counting means and for notifying sponsors of each advertising data of the advertising fee.

2. An advertising system using electronic communications as recited in Claim 1, with the system further comprising:
point-number management means for converting the number of directions for accessing each item of advertising data counted by the advertising-data identification/counting means into a point number and for accumulating and updating the point number for each user;
point-number storage means for sorting and storing the point number by each user, as updated by the point-number management means; and
point-service notification means for notifying the user of the number of points stored in the point-number storage means and of various service-data offers based on the point number.

3. An advertising system using electronic communications as recited in Claim 2, with the system further comprising:
home-page access means for enabling the user to access home pages of sponsors of the advertising data, based on the advertising data displayed by the display means;
order/request notification means for notifying advertising-data sponsors, via the home page accessed by the user via the home-page access means, of orders for products or requests for services included in the viewed advertising data; and
order/request-point notification means for notifying the point-number management means of the point number, based on the products ordered or services requested by a user using the order/request notification means.

4. An advertising system using electronic communications as recited in Claim 1, wherein the electronic communications is electronic mail employing the Internet, satellite communications, or both.

5. An advertising method using electronic communications, comprising the steps of:
inputting personal data relating to the user;
storing the inputted personal data;
inputting advertising data;
storing the advertising data that has been input;
extracting advertising data that is tailored to the user from the stored advertising data, based on the stored personal data relating to the user;
transmitting the extracted advertising data to the user via.the electronic communications;
notifying the user of the transmitted advertising data;
displaying the advertising data, based on directions from the user for accessing data;
identifying the type of displayed advertising data;
counting the number of access directions for displaying the advertising data;
calculating a fee for the displayed advertising data, based on the number of access directions counted; and
notifying the sponsor of the displayed advertising data of the calculated advertising fee.

6. An advertising method using electronic communications as recited in Claim 5, further comprising the steps of:
converting the number of access directions for the counted advertising data to a point number;
accumulating and updating the point number for each user;
sorting and storing the updated point number for each user; and
notifying the user of the number of stored points and various service-data offers based on the point number.

7. An advertising method using electronic communications as recited in Claim 6, further comprising the steps of:
accessing the home page of the advertising-data sponsor, based on advertising data displayed by the user;
notifying the sponsor of the advertising data, via the home page accessed by the user, of orders for products or requests for services included in the viewed advertising data; and
issuing a notification of the point number based on products ordered or services requested.

8. An advertising method using electronic communications as recited in Claim 5, wherein the electronic communications is electronic mail employing the Internet, satellite communications, or both.
